# EUROPÄISCHE PATENTSCHRIFT

(11) **EP 2 209 249 B1**
(45) Veröffentlichungstag und Bekanntmachung des Hinweises auf die Patenterteilung: **15.04.2020**
(21) Anmeldenummer: 10000390.4
(22) Anmeldetag: 18.01.2010
(51) Int. Cl.: H04L 1/20, H04L 25/49

(54) **Verfahren zur Bewertung der Signalqualität in einem Netzwerk mit Manchester-codierten Signalen mit Hilfe eines Augendiagramms**
Method for evaluating the signal quality in a network with Manchester-encoded signals with the help of an eye diagram
Procédé d'évaluation de la qualité du signal dans un réseau doté de signaux à codage de Manchester à l'aide d'un diagramme de l'oeil

(30) Priorität: 20.01.2009 DE 102009005274
(43) Veröffentlichungstag der Anmeldung: 21.07.2010
(73) Patentinhaber: Indu-Sol GmbH, 04626 Schmölln (DE)
(72) Erfinder: Schiff, Andreas, 88097 Eriskirch (DE)
(74) Vertreter: Riebling, Peter

(56) Entgegenhaltungen:
- US-A- 4 881 059
- US-A1- 2004 183 518
- A. P. Verlijsdonk: "On the application of biphase coding in data communication systems", Eindhoven University of Technology Research Reports, 1. Januar 1982 (1982-01-01), Seiten 1-24, XP55040834, ISBN: 978-9-06-144132-8 Gefunden im Internet: URL:http://alexandria.tue.nl/extra1/erap/p ublichtml/8302241.pdf [gefunden am 2012-10-11]
- UEMATSU Y ET AL: "Time-domain analysis of the signal integrity of a 1-Gbps 4-module memory bus with a broadband ceramic directional coupier designed in the frequency domain", ELECTRONIC COMPONENTS AND TECHNOLOGY, 2004. ECTC '04. PROCEEDINGS LAS VEGAS, NV, USA JUNE 1-4, 2004, PISCATAWAY, NJ, USA,IEEE, vol. 2, 1 June 2004 (2004-06-01), pages 1746-1751, XP010715234, DOI: 10.1109/ECTC.2004.1320354 ISBN: 978-0-7803-8365-4

## Beschreibung

Die Erfindung betrifft ein Verfahren zur Bewertung der Signalqualität in einem Netzwerk mit Manchester-codierten Signalen nach dem Oberbegriff des Patentanspruches 1.

Bei einem Netzwerk mit Manchester-codierten Signalen (z.B. einem AS-Interface Netzwerk) handelt es sich um einen Feldbus bzw. ein Kommunikationsnetzwerk für die industrielle Automatisierungstechnik. Die Struktur im Netz betrifft eine bestimmte Topologie von Sensoren, Aktuatoren und Feldgeräten, die in einer relativ unbestimmten Struktur angeordnet werden können, nämlich z. B. an einer sternförmigen Struktur, eine Ringstruktur, eine Linienstruktur mit Linien und kurzen Stichleitungen sowie mit einer Baumstruktur.

Bei der Verwendung derartiger AS-Interface-Netzwerke kommt es darauf an, dass über eine relativ große Leitungslänge von z. B. 200 oder 300 m die Signale noch ungestört und verwertbar zu dem entsprechenden Empfänger übertragen werden.

Im Regelfall wird zum Aufbau und Betrieb eines AS-Interface-Netzwerkes kein Diagnosegerät benötigt. Wenn alle Spezifikationen für die Komponenten und den Aufbau beachtet werden und einwandfreie Produkte eingesetzt werden, ist ein störungsfreier Betrieb sichergestellt.

In der Praxis gibt es dennoch häufig anzutreffende Fehler, die bei der Planung, beim Aufbau und der Inbetriebnahme gemacht werden. Dazu gehören
- Doppeladressierungen (zwei oder mehr Slaves haben die gleiche Adresse)
- Überschreitung der zulässigen Netzwerk-Länge
- Verwendung von nicht geeigneten Netzwerk-Leitungen
- Überschreitung der max. zulässigen Spannungsfälle
- unzulässige Erdschlüsse, asymmetrisch betriebenes Netzwerk
- Einkopplung externer Störungen
- Einsatz nicht spezifikationskonformer Produkte (insbesondere Produkte mit nicht korrekter Impedanz)
- Einsatz fehlerhafter Produkte

Um solche Fehler in einem gegebenen AS-Interface-Netzwerk schnell und zuverlässig identifizieren und beheben zu können, fehlt nach wie vor ein geeignetes Diagnosegerät.

Aktuell werden auf dem Markt Diagnosegeräte für AS-Interface-Netzwerke angeboten, die Kommunikationsfehler auf digitaler Ebene erfassen, bewerten und anzeigen können. Die mit diesen Geräten erfasste Fehlerzahl stimmt aber nicht notwendigerweise mit der tatsächlich aufgetretenen Fehlerzahl überein, weil es durchaus vorkommt, dass der Master bzw. der Slave und das Diagnosegerät ein und dasselbe Telegramm unterschiedlich bewerten. Dies ist besonders im Grenzbereich zwischen den Bewertungen "noch zulässig" und "nicht mehr zulässig" häufig der Fall. Ferner erfassen die verfügbaren Diagnosegeräte nicht alle vorkommenden Fehlertypen, so etwa werden korrupte Masteraufrufe überhaupt nicht als Fehler gezählt. Darüber hinaus unterscheiden die Diagnosegeräte nicht zuverlässig zwischen den Fällen "keine Slaveantwort vorhanden" und "Slaveantwort ist fehlerhaft". Fehler können daher nicht eindeutig dem Master oder dem Slave zugeordnet werden.

Wegen der Besonderheiten des AS-Interface-Kommunikationsverfahrens (es wird Manchester-Codierung und die sogenannte "Alternierende Pulsmodulation" (APM) verwendet), ist es nicht möglich, ein Standard-Laborgerät für diese Analysen heranzuziehen, etwa ein Oszilloskop. Dies ist in der Regel nicht sinnvoll einsetzbar, weil es nicht über die notwendigen Triggermöglichkeiten verfügt, die erforderlich sind, um z. B. die Kommunikation zwischen dem Master und einem Slave isoliert analysieren zu können.

Mit der weiteren Verbreitung von AS-Interface in zahlreichen Gebieten der Automatisierungstechnik steigen auch die Anforderungen an die optimale Nutzung der AS-Interface-Technologie. So besteht der vielfache Wunsch, die Netzwerke bis an die physikalisch möglichen Grenzen hin betreiben zu können. Dies kann aber nur dann ohne Einbuße an Zuverlässigkeit erfolgen, wenn die Qualität der Signalübertragung messtechnisch sicher erfasst und bewertet werden kann. Dies ist mit den derzeit auf dem Markt angebotenen Geräten nicht möglich.

Die Anwendung eines Augendiagramms wird beispielsweise in den Druckschriften DE 44 15 208 A1, DE 10 2005 053 000 A1, US 2004/183518 A1 oder in der Druckschrift A.P. Verlijsdonk: "On the application of biphase coding data communication systems", Einhoven Universitiy of Technology Research Reports, Seiten 1-24, ISBN: 978-9-06-144132-81, Januar 1982 (1982-01-01) beschrieben.

Bei derartigen Anwendungen geht es darum, dass man die Qualität einer unbekannten Impulsfolge bewertet, wobei die in den Druckschriften angewendeten Verfahren zur Erzeugung eines Augendiagramms nur die harmonische Grundstruktur der zu untersuchenden Impulsfolge bewerten.

Dies reicht jedoch nicht für die Qualitätsbewertung von digitalen Impulsfolgen in lang gestreckten AS-Interface-Netzwerken aus.

In der Druckschrift der Firma Fluke Corp.: Fluke Scope Meter 125 zur Fehlersuche in Foundation-Fieldbus-Installationen, 03,2008 und Fluke Corporation: Fluke 125 Industrielle Scope Meter. Bedienungshandbuch, Januar 2007 ist offenbart, dass das "Wechselspannungssignal am Bus" (Seite 6, Spalte 1) in Augendiagrammform erzeugt wird. Somit zeigt diese Druckschrift die Erzeugung von Augendiagrammen in AS-Interface Netzwerken.

Diese Druckschrift zeigt jedoch nicht die Signale differenziert nach den einzelnen Sendern im Netzwerk. Die Signale sind auch nicht synchronisiert mit der Startflanke des jeweiligen Telegramms. Es ist auch kein "Doppelauge" gezeigt, sondern insgesamt 3 Augen (Bilder 8 und 9) und somit lässt diese Druckschrift keine Prüfung auf Datenbitfehler zu. Im Übrigen kann auch nicht die Bitzeit nach Ende des Telegramms angezeigt werden.

Beim "Foundation Fieldbus", für dessen Analyse das beschriebene Gerät Fluke 125 ausgelegt ist, gibt es eine interessante Besonderheit, auf die im Text nicht eingegangen wird: der Start- und der Ende-Delimiter bei Foundation-Fieldbus-Telegrammen verstoßen gegen die Manchester-Codierregeln. Damit soll erreicht werden, dass Start und Ende jedes Telegramms sicher erkannt werden können. Hätten die Entwickler des Fluke 125 die Absicht gehabt, die Telegramme separat nach Sender darzustellen, dann hätten sie diese Besonderheit berücksichtigen müssen.

In der Druckschrift UEMATSU Y ET AL: "Time-domain analysis of the signal integrity of a 1-Gbps-4-module memory bus with a broadband ceramic directional coupler designed in the frequency domain", ECTC 2004, DOI: 10.1109/ECTC.2004.1320354 ISBN:978-0-7803-8365-4, Seiten 1746-1751, 1.Juni 2004 (2004-06-01) wird die Bewertung der Signalqualität bei der SignalÜbertragung auf einem XTL-Bussystem für einen Hochgeschwindigkeits-Speicherbus auf dem Motherboard eines Rechnersystems beschrieben.

Ein XTL-Bussystem ist jedoch nicht für ein Kommunikationsnetzwerk mit einem Feldbus geeignet, weil die bekannte Busstruktur nur mit kurzen Leitungsverbindungen auf dem Motherboard eines Rechnersystems arbeitet. Es handelt sich demnach lediglich um die Bewertung der Signalqualität bei einem Hochgeschwindigkeits-Bussystem für den Speicherbus eines Rechners.

Damit ist es jedoch nicht möglich, über lange Leitungslängen von z.B. 200 oder 300m eine Bewertung der Signalqualität zu bewerkstelligen.

Die technische Lehre dieser Druckschrift befasst sich überdies nicht mit dem Problem, dass eine Überschreitung einer zulässigen Netzwerk-Länge oder eine Verwendung von nicht geeigneten Netzwerk-Leitungen oder auch die Überschreitung der maximal zulässigen Spannungsabfälle oder unzulässige Erdschlüsse erkannt werden könnten.

Demnach ist ein solches Hochgeschwindigkeits-Bussystem für den Speicherbus einer Rechenanlage nicht für ein Interface-Netzwerk bei der Verwendung mit großen Leitungslängen von z. B. 200 oder 300 m geeignet.

Ein solches Hochgeschwindigkeits-Bussystem für den Speicherbus eines auf dem Motherboard eines Rechners implementierten Rechnersystems ist nicht auf die Verwendung von nur zwei Busleitungen angewiesen. Die Druckschrift beschreibt vielmehr die Verwendung von mindestens 3 oder 4 Busleitungen.

Somit ist ein solches Hochgeschwindigkeits-Bussystem nicht für die Auslegung eines räumlich weit auseinander liegenden Bussystems für die industrielle Automation geeignet, bei dem wegen der räumlichen Entfernung der Busteilnehmer möglichst wenige Busleitungen verwendet werden sollten.

Der Erfindung liegt deshalb die Aufgabe zugrunde, ein Verfahren und eine Vorrichtung zur Bewertung der Signalqualität in einem Netzwerk so weiterzubilden, dass auch eine Bewertung der Signalqualität in ausgedehnten Netzwerken, wie z. B. einem Feldbus oder einem Kommunikationsnetzwerk für die industrielle Automatisierungstechnik bei geringerem Leitungs- und Installationsaufwand stattfinden kann.

Die Lösung der gestellten Aufgabe erfolgt durch die technische Lehre der unabhängigen Patentansprüche 1 und 14.

Ein wesentliches Merkmal der Erfindung besteht in der Verwendung eines Zweileiter-Bussystems, mit dem ohne hohen Leitungs- und Installationsaufwand eine Vielzahl von räumlich weit entfernten Busteilnehmern an den Zweileiter-Bus angeschlossen werden können. Somit werden ein Verfahren und eine Vorrichtung zur Bewertung der Signalqualität in einem Netzwerk beschrieben, bei dem erstmals die Signalqualität in ausgedehnten Netzwerke, wie z. B. einem Feldbus oder einem Kommunikationsnetzwerk für die industrielle Automatisierungstechnik bewertet werden kann.

Die Erfindung definiert ein neues Qualitätsmerkmal für das analoge AS-Interface-Signal, anhand dessen nicht nur beurteilt werden kann, ob ein Netzwerk mit ausreichend geringer Fehlerrate arbeitet, sondern auch, wie viel Sicherheitsreserve (Störabstand) vorhanden ist. Hierzu soll die an sich bekannte Methode des Augendiagramms geeignet modifiziert und auf AS-Interface-Signale angewendet werden, wobei die Signale der einzelnen Sender im Netzwerk erkannt und getrennt voneinander ausgewertet werden sollen.

Die Erfindung analysiert einen Feldbus für jeden Sender im Feldbus getrennt. Feldbusse haben eine Eigenschaft, die "Multidrop" genannt wird (IEC61158-2). Das bedeutet, dass an ein und demselben Kabel eine Vielzahl von Teilnehmern angeschlossen sein können. Die Übertragungsstrecken von jedem dieser Sender zum Messort sind unterschiedlich. So kann beispielsweise das Auftreten einer störenden Signalreflexion vom Anschlussort des Senders im Netzwerk abhängig sein. Daraus folgt, dass die Signalqualitäten sehr unterschiedlich sein können, obgleich alle Sender an ein und demselben Netzwerk angeschlossen sind. Es ist also notwendig, die Signale aller Sender separat darzustellen und zu bewerten. Keines der bisher beschriebenen Verfahren nach dem Stand der Technik berücksichtigt dieses Problem.

Die Erfindung berücksichtigt das im Feldbus verwendete Codierverfahren, indem die Darstellung eines "Doppelauges" gewählt wird. Hierbei ist wesentlich, dass das linke Auge geschlossen sein darf, das rechte jedoch offen sein muss. Damit ist es möglich, Informationsfehler im Telegramm zu erkennen. Keines der bisher beschriebenen Verfahren berücksichtigt diese Besonderheit. Im Gegenteil: Würde man die Lehre der Druckschrift "Fluke" ohne diese Modifikation anwenden, dann würde man feststellen, dass zahlreiche Augen geschlossen sind, was zu einer fehlerhaften Bewertung führen würde.

Die Erfindung prüft hingegen auch die Telegrammlänge und die Pause, die nach Ende des Telegramms vorhanden sein muss und so können Längenfehler erkannt werden.

Die erfindungsgemäße technische Lehre ist nicht nur auf AS-Interface-Netzwerke anwendbar, sondern auf alle Netzwerke mit Manchester-codierten Signalübertragung, somit auch beispielsweise auf das ProfiBus PA Netzwerk.

Der einfacheren Beschreibung wegen wird jedoch im Folgenden die Eigenschaften eines AS-Interface-Netzwerk beschrieben, obwohl die Erfindung hierauf nicht beschränkt ist.

Erfindungsgemäß wird nun ein AS-Interface-Telegramm (Masteraufruf oder Slaveantwort) so dargestellt, dass eine Bewertung nach Amplitude und Zeitverlauf auf einfache Weise stattfinden kann. Hierzu wird das Telegramm wie folgt aufbereitet:
1. Ein etwaiger Gleichspannungsanteil, der im aufgenommenen Telegramm enthalten sein könnte, wird eliminiert.
2. Die Amplitude des ersten (negativen) Pulses wird zu 100 % festgelegt. Das gesamte Telegramm wird entsprechend in der Amplitude von Volt auf % umgerechnet.
3. Der Zeitpunkt "3µs nach Beginn des Telegramms" wird bei 50 % der Signalamplitude des ersten (negativen) Pulses festgelegt. Der Zeitmaßstab für das gesamte Telegramm wird entsprechend ausgerichtet.
4. Das Telegramm wird in Abschnitte von je 6µs aufgestellt, die übereinander auf dem Bildschirm dargestellt werden.
5. Auch eine 6µs lange Zeit nach Ende des Telegramms wird erfasst und dargestellt, um Telegrammlängenfehler und eventuell vorhandene störende Überschwinger am Ende des Telegramms sichtbar zu machen.
Das entstandene Bild kann nun u. a. nach den folgenden Kriterien bewertet werden:

### 1. Ist ein Informationsfehler im Telegramm enthalten?

Wenn ein Informationsfehler im Telegramm enthalten ist, dann wäre in der zweiten Bithälfte (3µs bis 6µs) kein Puls vorhanden, es würde also eine (blaue) Linie durch die Mitte des rechten Auges gehen. Dies wäre ein Verstoß gegen die Codierregeln von AS-Interface.

### 2. Weist das Telegramm einen Längenfehler auf?

Wenn das Telegramm zu lang ist (Längenfehler) oder einen unzulässig hohen Überschwinger am Ende aufweist, dann kann dies an der grünen Kurve im Augendiagramm abgelesen werden. Wenn das Telegramm zu kurz ist, wird dies bereits als Informationsfehler erkannt.

### 3. Liegen alle Signalamplituden bei 100 %?

Wenn das Telegramm einen relativen Amplitudenfehler enthält, dann wäre das linke und/oder das rechte Auge flacher; bei mindestens einer Kurve würde das Maximum bei < 70 % liegen.

### 4. Liegen alle Signalflanken im korrekten Zeitfenster?

Wenn das Telegramm einen Zeitfehler enthält, dann würde die 50%-Amplitudenlinie außerhalb des zulässigen Zeitfensters 3µs (+1µs/-0,5µs) überschritten.

Je weiter Signale von diesen Sollvorgaben abweichen, desto schlechter wird die Signalqualität bewertet.

Aus den Amplituden- und Zeitabweichungen von den Sollwerten eines Telegramms wird ein Zahlenwert errechnet, der die "Signalqualität" des gesamten Telegramms zusammenfassend quantitativ bewertet. Diese Signalqualität wird für jeden im Netzwerk vorhandenen Sender separat erfasst. Sie wird beispielsweise auf eine Skala von 0 % ... 80 % (Signalqualität ist nicht ausreichend), 80 % bis 100 % (Signalqualität ist ausreichend) und >100 % (Signalqualität ist gut) normiert.

Weist ein gegebenes Netzwerk an allen Messpunkten Signalqualitäten von >100 % auf, ist es aus übertragungstechnischer Sicht in Ordnung.

Liegt die Signalqualität einzelner Sender an einzelnen Messpunkten im Bereich 80 % bis 100 %, dann kann dies in der Regel noch toleriert werden.

Liegt die Signalqualität einzelner Sender an einem Messpunkt im Bereich <80 %, dann sollten Verbesserungsmaßnahmen ergriffen werden, auch wenn das Netzwerk ansonsten einwandfrei läuft.

Die Vorteile des neuen Diagnosegerätes im Vergleich zum Stand der Technik sind zusammengefasst die Folgenden:
1. Das neue Gerät kann erstmals die Signalqualität quantitativ erfassen und anzeigen und bietet somit eine Möglichkeit, AS-Interface-Netzwerke bis an die physikalischen Grenzen sicher zu betreiben. Diese Grenzen liegen bei vielen Topologien weit jenseits der bisher angegebenen 100 m Gesamtlänge. Diese Reserve konnte bisher aber nicht genutzt werden, weil die Feststellung der Grenze über die Telegrammfehlerrate allein viel zu unsicher ist. AS-Interface-Netzwerke können damit noch preiswerter aufgebaut werden.
2. Das neue Gerät kann mit dem Vergleich der aktuell ermittelten Signalqualität und früheren Messergebnissen eine etwaige Verschlechterung der Übertragungseigenschaften des Netzwerkes (z. B. durch Isolationsschäden am Kabel oder durch geschädigte Teilnehmer) im Vorfeld eines Netzwerk-Ausfalls erkennen und rechtzeitige präventive Maßnahmen ermöglichen. Ungeplante Ausfallzeiten von Maschinen und Anlagen können damit vermieden werden.
3. Das neue Gerät kann in Entwicklungslabors die Entwicklung neuer Slaves wesentlich erleichtern und beschleunigen, weil zuverlässige Messergebnisse schnell und einfach bereitgestellt werden können. Die Zeit bis zur Markteinführung kann verkürzt werden. Das Entwicklungsergebnis ist mit weniger Fehlern behaftet.
4. Das neue Gerät kann bei Störungen an Netzwerken im Feld die Fehlersuche ganz wesentlich erleichtern und damit beschleunigen. Die tatsächliche Ursache einer Störung ist schneller identifiziert und behoben. Die Ausfallzeiten von Maschinen und Anlagen können damit verkürzt werden.
5. Eine Variante des neuen Gerätes kann für längere Zeit am Bus angeschlossen und mit einem größeren Datenspeicher zur längerfristigen Aufzeichnung des Kommunikationsgeschehens ausgerüstet werden, so dass auch sporadisch auftretende Fehler erfasst und zu einem späteren Zeitpunkt analysiert werden können.
6. Eine weitere Variante kann dauerhaft am Bus angeschlossen werden und mit einem Meldeausgang (etwa über WLAN) das Auftreten von Problemen melden, lange bevor der Busausfall zu einem Anlagenstillstand führt. Damit unterstützt das Gerät die zustandsbasierte Instandhaltung bei kritischen Einsatzfällen.

Die Erfindung ist nicht im Verfahrensschritt 2 des vorgenannten Verfahrens darauf beschränkt, dass die Amplitude des ersten (negativen) Pulses auf 100 % festgelegt wird.

In einer anderen Ausgestaltung der Erfindung kann es vorgesehen sein, auf jeden anderen Prozentwert diese Amplitude des ersten negativen Pulses zu normieren, z. B. auf einen Wert von 90 %, 80 % oder dergleichen.

Im dritten Verfahrensschritt wird angegeben, dass der Zeitpunkt "3µs nach Beginn des Telegramms" bei 50 % der Signalamplitude des ersten (negativen) Pulses festgelegt wird.

Dieser Zeitpunkt von 3µs ist in weiten Grenzen veränderbar. Er kann im Zeitraum von 1µs bis zu maximal 6µs verändert werden. Dieser Zeitpunkt bestimmt lediglich das Aussehen der Impulsscheiben, die zum Augendiagramm zusammengesetzt werden.

Im vierten Verfahrensschritt werden die Telegramme in Abschnitte von je 6µs aufgeteilt, die als Impulsscheiben übereinanderliegend auf dem Bildschirm in Form des Augendiagramms dargestellt werden.

Auch diese Aufteilung in Abschnitte von je 6µs ist veränderbar, und zwar in geradzahligen Vielfachen von 6µs.

Würden stattdessen Abschnitte von 12µs verwendet werden, würde sich die doppelte Augenzahl im Augendiagramm ergeben.

Der Zeitabschnitt von 6µs ist darin begründet, dass die Bit-Zeit nach dem AS-Interface-Modulationsverfahren exakt 6µs beträgt.

Wird jedoch ein anderes Modulationsverfahren verwendet, welches für ein anderes Netzwerk geeignet wäre, können auch andere Zeitabschnitte gewählt werden. Bei einer Anwendung bei einem Profi-Bus PA würde beispielsweise ein Abschnitt von einer Zeitdauer von 32µs oder einem Vielfachen davon verwendet.

Im fünften Verfahrensschritt ist dargestellt, dass auch eine 6µs lange Zeit nach Ende des Telegramms erfasst wird, um eventuell vorhandene störende Überschwinger am Ende des Telegramms sichtbar zu machen.

Selbstverständlich ist diese Zeit von 6µs nicht beschränkend für die vorliegende Erfindung anzusehen. Es können auch Vielfache dieser Zeit verwendet werden, selbstverständlich können bei anderen Modulationsverfahren, wie z. B. bei dem oben genannten Profi-Bus PA auch Vielfache von 32µs Beobachtungszeiten eingeführt werden, um bei diesen anderen Bus-Systemen ein Überschwingen zu beobachten.

Die Schwierigkeit bei der Durchführung des Verfahrens nach der vorliegenden Erfindung liegt gegenüber dem Stand der Technik (DE 44 15 206 A1) darin, dass man bei der vorliegenden Erfindung Manchester-codierte Impulsfolgen auswertet, was beim Stand der Technik nicht bekannt ist.

Bei derartigen Manchester-codierten Impulsfolgen nach der vorliegenden Erfindung gibt es nämlich Impulsanteile oder Impulsstrecken, in denen keine Information vorhanden ist und andere Impulse, in denen Informationswerte vorhanden sind.

Dementsprechend muss auch die Auswertung im Doppel-Augendiagramm erfolgen, um dieser Besonderheit Rechnung zu tragen.

Dies führt z. B. dazu, dass eine qualitativ hochwertige Übertragung auf dem AS-Interface-Netzwerk über die dort angegebenen Leitungen als qualitativ hochwertig dann anerkannt wird, wenn im Augendiagramm das linke Auge geschlossen sein darf, d.h. von Kurvenzügen durchsetzt sein darf, während das rechte Auge offen sein muss. Dies ist das entscheidende Qualitätskriterium für eine zulässige Signalübertragung im Netzwerk.

Dies ist beim Stand der Technik nicht bekannt und wird deshalb beim Stand der Technik nicht als Qualitätsmaßstab für die Auswertung von codierten Impulsfolgen verwendet.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert ein Blockschaltbild eines AS-Netzwerkes
- Figur 2:: eine Beispiel-Bitfolge des Senders in dem Blockschaltbild nach Figur 1
- Figur 3:: eine Manchester-codierte Bitfolge, die aus der Bitfolge nach Figur 2 codiert wurde
- Figur 4:: die Impulsfolge des Senders, der entsprechend Figur 3 die Sendeinformation aussendet
- Figur 5:: die vom Empfänger empfangene Impulsfolge, die aufgrund der Leitungslänge der Leitungen 5, 6 teilweise verzerrt ist und deren Qualität mit dem erfindungsgemäßen Diagnoseverfahren überprüft werden soll
- Figur 6:: schematisiert die Rückgewinnung der vom Empfänger in Figur 5 empfangenen Impulsfolge zu der Beispiel-Bitfolge, die vom Sender nach Figur 2 erzeugt wurde
- Figur 7:: die gleiche Darstellung der empfängerseitig empfangenen Impulsfolge wie Figur 5 mit Darstellung weiterer Einzelheiten
- Figur 8:: die Elimination des Gleichanteils aus der Impulsfolge nach Figur 7
- Figur 9:: die Normierung der Amplitude der Impulsfolge aus Figur 8
- Figur 10:: die Normierung der Impulsfolge nach Figur 9 auf der Zeitachse
- Figur 11:: das Augendiagramm, welches aus Impulsscheiben gewonnen wurde, die in Figur 10 herausgeschnitten wurden
- Figur 12:: eine abgewandelte Ausführungsform eines ähnlichen Augendiagramms mit Einzeichnung von Bewertungsflächen

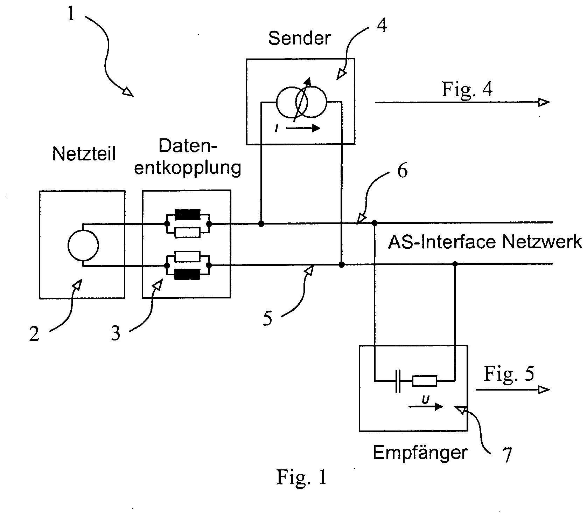

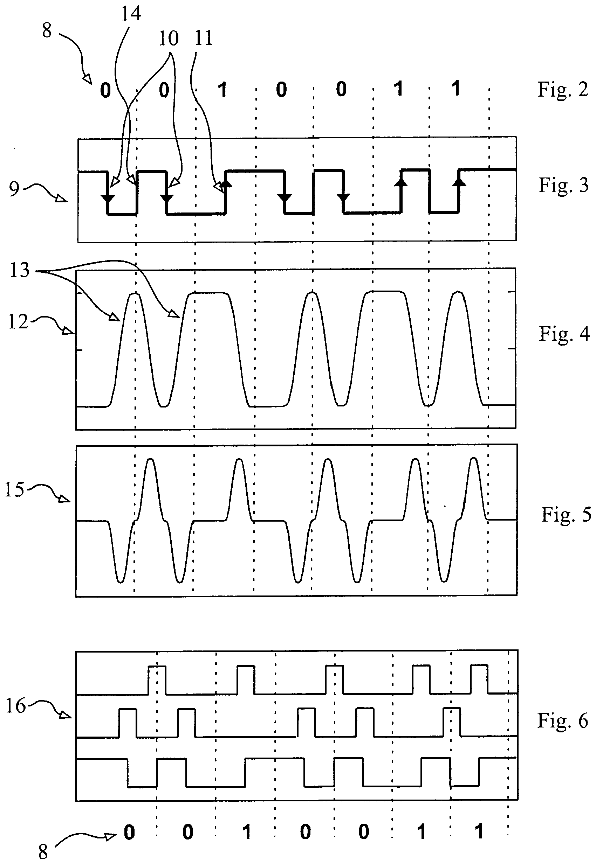

In Figur 1 ist allgemein ein AS-Netzwerk 1 dargestellt, welches im Wesentlichen aus einem Netzteil 2 besteht, das über eine Datenentkopplung 3 einen Versorgungsstrom auf die Leitungen 5, 6 gibt, über welche gleichzeitig seriell auch die in den Figuren 2 bis 5 dargestellten Datenpakete übertragen werden. Die beiden in der Datenkopplung 3 angeordneten Drosseln führen gleichzeitig auch eine Transformation von dem Sendediagramm des Senders 4 gemäß Figur 4 in das Empfängerdiagramm gemäß Figur 5 durch.

Der Sender 4 sendet deshalb entsprechend eine beispielhafte Bitfolge 8 in Figur 2 aus, die von einem oder mehreren Empfängern 7 auf den Leitungen 5, 6 empfangen und zurück decodiert wird. Zum Beispiel wird in Figur 2 angegeben, dass die Bitfolge 0010011 vom Sender 4 auf die Leitung 5, 6 übertragen wird.

Nach den Regeln des AS-Interface-Netzwerkes wird diese Bitfolge zunächst in Form einer Manchester-codierten Bitfolge 9 umgesetzt.

Dies bedeutet, dass eine logische 0 im Diagramm nach Figur 3 einen nach unten gerichteten Pfeil 10 erzeugt und dann hier zwischen ein Phasenwechsel 14 stattfindet, der wiederum im nächsten Zeitabschnitt einen nach unten gerichteten Pfeil erzeugt. Dies bedeutet, dass bei zwei hintereinander folgenden digitalen Nullen zwei nach unten gerichtete Pfeile 10 vorhanden sind, die durch einen Phasenwechsel 14 voneinander getrennt sind.
Folgt hingegen auf der digitalen zweiten Null und dem nach unten gerichteten Pfeil 10 eine digitale 1 zwischen zwei (gestrichelt gezeichneten) Vertikalen in den Figuren 2 bis 6, sind hierbei jeweils Zeitabstände von 6µs gegeben.

Dies bedeutet, dass beim Phasenwechsel zwischen der logischen Null und der logischen 1 insgesamt eine Zeit von 6µs vergeht. Demzufolge ergibt sich ein nach oben gerichteter Pfeil 11 gemäß Figur 3.

Die angegebene Zeit von 6µs ist die sogenannte Bit-Zeit, die zwischen dem vertikalen, gestrichelten Linien in den Figuren 2 bis 6 gegeben ist.

Demzufolge erzeugt nun der Sender 4 aus der in Figur 3 dargestellten Manchester-codierten Bitfolge 9 eine Strom-Impulsfolge 12, die aus dem Integral des Sinusquadrates der gebildeten Impulsspitzen besteht. Der Informationsanteil der Manchester-codierten Bitfolge 8 ist hierbei in der Lage der Flanken enthalten.

Die Impulsfolge 12 des Senders nach Figur 4 wird nun über die Leitung 5, 6 übertragen und kommt in verschliffener und teilweise verfälschter Form als Spannungs-Impulsfolge 15 gemäß Figur 5 im Empfänger 7 an.

Ausgangspunkt der vorliegenden Erfindung ist nun die Qualität und Güte der vom Empfänger 7 nach Figur 5 empfangenen Impulsfolge 15 zu bewerten.

Wichtig bei der vorliegenden Erfindung ist, dass die Bewertung der Qualität der vom Sender empfangenen Impulsfolge 15 am Messort stattfindet, wobei der Messort beliebig auf der Leitung 5, 6 angebracht werden kann. Es ist deshalb nicht lösungsnotwendig, die Bewertung der Güte im Empfänger 7 selbst anzuordnen.

Lediglich der Vollständigkeit halber wird in Figur 6 noch dargestellt, wie aus der empfängerseitig empfangenen Impulsfolge 15 mit der Auswertung einer Impulsfolge 16 die als Beispiel übertragene Bitfolge 8 zurück gewonnen wird.

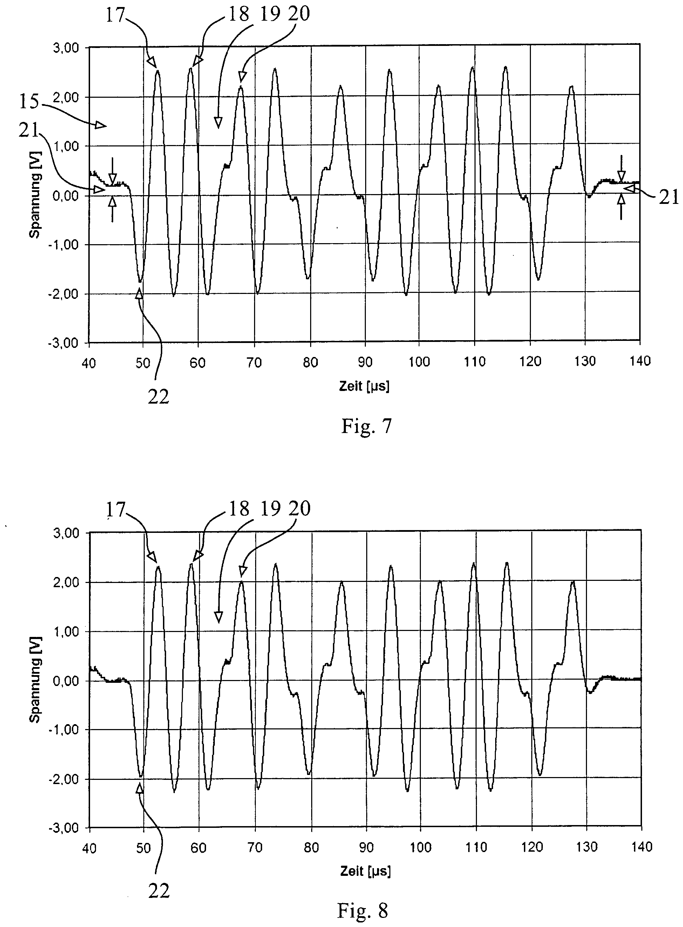

Die Figur 7 zeigt demzufolge eine vergrößerte Darstellung der Impulsfolge 15 im Empfänger mit Darstellung weiterer Einzelheiten.

Wichtig hierbei ist, dass möglicherweise die Impulsfolge 15 einen Gleichanteil 21 aufweist, sodass in unzulässiger Weise alle Amplituden nach oben oder nach unten verschoben werden. Hier ist es wesentlich, dass dieser Gleichanteil 21 eliminiert wird, wie dies in Figur 8 dargestellt wird.

Ferner ist wesentlich, dass die einzelnen Pulse 17, 18 bewertet werden und ebenso die zwischen den Pulsen sich ergebenden Pausen 19 im Vergleich zu dem jeweils nachfolgenden Puls 20.

Es erfolgt also eine umfassende Auswertung von Pulsen 17, 18, 20 in Verbindung mit dazwischen liegenden Pausen 19.

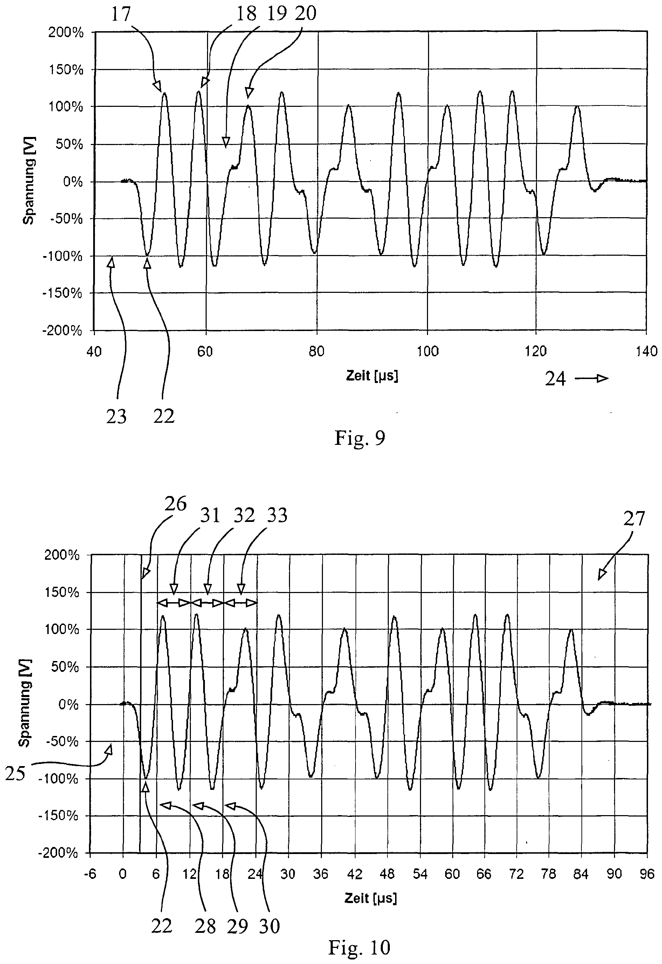

Nachdem die Figur 8 die gleiche Impulsfolge bei eliminiertem Gleichanteil zeigt, zeigt die Figur 9 eine Normierung der Amplitude auf der Höhe des ersten negativen Pulses 22. Die Spitze dieses negativen Pulses 22 wird demzufolge auf eine Spannung von -100 % normiert, wonach nachfolgend alle anderen Pulse 17, 18, 20 dementsprechend angepasst werden.

Damit wird das gesamte Telegramm nach der Figur 9 in seine Gesamtheit auf die Normierungslinie 23 bezogen.

Nach der Amplitudennormierung in Figur 9 erfolgt eine Zeitachsen-Normierung gemäß Figur 10.

Hierbei ist erkennbar, dass die Zeitachse neu festgelegt wird, so dass die Amplitude des ersten negativen Pulses 22 bei der Zeit 3µs genau -50 % beträgt. Dies ist in Figur 10 durch den Triggerzeitpunkt 26 als vertikale Linie gezeigt, der genau bei 50 % den Negativpuls 22 schneidet. Dieser Triggerzeitpunkt 26 ist der Ausgangspunkt für alle späteren Triggervorgänge bei den anderen Pulsen.

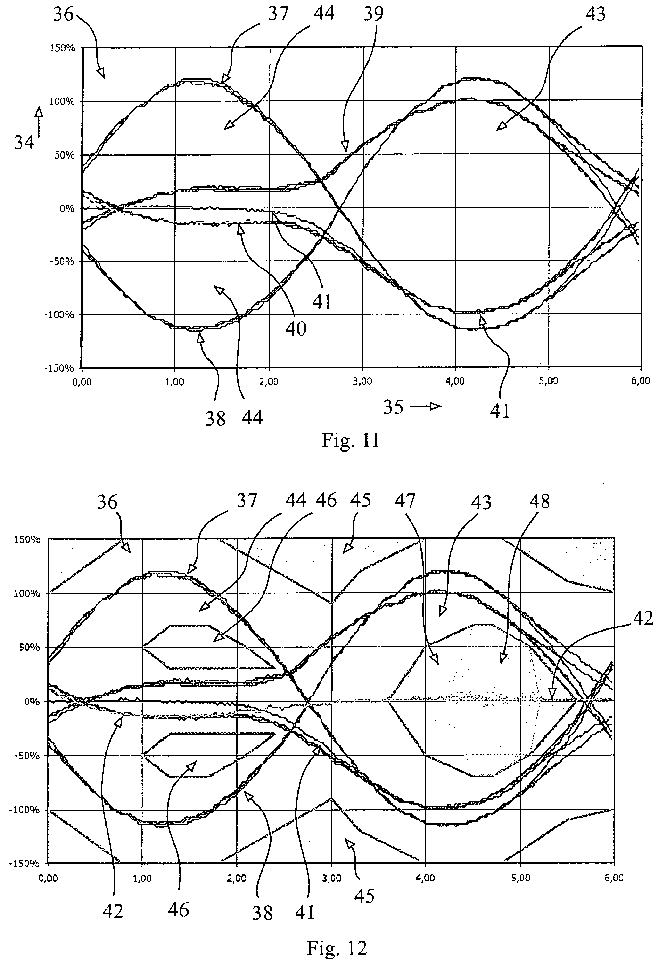

Wichtig hierbei ist, dass nun im Zeitraster von jeweils 6µs Triggerlinien 28, 29, 30 definiert werden, welche zwischen sich Impulsscheiben 31, 32, 33 definieren, die nun erfindungsgemäß ausgeschnitten werden und im Augendiagramm 36 gemäß Figur 11 aufeinandergelegt werden.

Es wird im Augendiagramm 36 die Symmetrie der ausgeschnittenen Impulsscheiben 31, 32, 33 überprüft und bewertet.

Im Augendiagramm 36 nach Figur 11 ist auf der Ordinate eine normierte Spannung 34 und auf der Abszisse eine Zeitachse 35 in µs aufgetragen.

Es ergeben sich nun eine Vielzahl von Kurvenzügen 37-42, die alle die Summe bestimmter Impulsscheiben 31-33 repräsentieren.

Die Augenöffnung 43 des rechten Auges wird durch mehrere Kurvenzüge definiert, nämlich einerseits durch den Kurvenzug 37 und andererseits durch den Kurvenzug 41 (unterer Augenanteil), während der obere Teil des rechten Auges 43 durch die Kurvenzüge 38 und 39 definiert wird.

Wichtig ist, dass bei der Auswertung im Augendiagramm die rechte Augenöffnung 43 offen ist, wobei diese Augenöffnung lediglich durch eine flache Impulsfolge 42 durchsetzt ist, welche eine Pausenzeit nach dem Impulstelegramm repräsentiert und die für die Auswertung der Qualität im Augendiagramm 36 keine Rolle spielt.

Entscheidend ist nun, dass bei einer Manchester-codierten Impulsfolge, wie sie die vorliegende Erfindung beschreibt, erkannt wurde, dass eine qualitativ gute Datenübertragung dann vorliegt, wenn die rechte Augenöffnung 43 durch keinerlei Impulszüge oder Kurvenzüge durchsetzt ist, während es bezüglich der linken Augenöffnung 44 gleichgültig ist, ob dort Kurvenzüge hindurch laufen oder nicht.

Die Figur 12 zeigt nämlich, dass man im Augendiagramm bestimmte Bewertungsflächen 45-48 digital definieren kann, um als Regel festzulegen, dass eine gute Qualität der Datenübertragung nur dann vorliegt, wenn keiner der Kurvenzüge 37-41 keine der Bewertungsflächen 45-48 schneidet. Es wird nochmals wiederholt, dass der Kurvenzug 42 hierbei keine Rolle spielt, weil er nach Beendigung des Informationstelegramms die Pause repräsentiert.

Wichtig ist also, dass in der linken Augenöffnung zwei symmetrisch zueinander angeordnete Bewertungsflächen 46 nicht von den Kurvenzügen in der linken Augenöffnung 44 geschnitten werden und ebenso sind außerhalb des Auges zwei symmetrisch zueinander angeordnete Bewertungsflächen 45 vorhanden, die ebenfalls nicht von den Kurvenzügen 37-41 geschnitten werden dürfen.

In der rechten Augenöffnung 43 ist hierbei eine größere Bewertungsfläche 47 vorhanden, die nicht geschnitten werden darf, und es ist eine innere Bewertungsfläche 48 definiert, die auf keinen Fall von irgendeinem der Kurvenzüge geschnitten werden darf, anderenfalls eine unzulässige Datenübertragung vorliegt.

Durch Anschauung des Augendiagramms 36 gemäß Figur 12 kann der Fachmann demzufolge einen sofortigen Überblick über die Signalqualität der auf der Leitung 5, 6 übertragenen Signale erhalten. Er kann erkennen, ob es eine verbotene Signalübertragung ist, eine falsch codierte und wenn die Geräte fehlerhaft angeschlossen sind.

Mit dem Einsatz des erfindungsgemäßen Augendiagramms nach Figur 12 ist es nun erstmals möglich, die im AS-Interface-Netzwerk als Standard vorgeschriebenen Leitungslängen von etwa 100 m auch topologiebedingt zu überschreiten.

Mit der erfindungsgemäßen Bewertung der Signalqualität können Interface-Netzwerke bis an die physikalischen Grenzen sicher betrieben werden, wobei diese Grenzen auch jenseits der bisher angegebenen 100 m Gesamtlänge liegen können. Damit kann eine gegebene Topologie eines Netzwerkes vollkommen ausgeschöpft werden, auch wenn Leitungslängen von mehr als 100 m vorhanden sind.

**Zeichnungslegende**

| | | | |
|---|---|---|---|
| 1 | AS-Netzwerk | 25 | Triggerschwelle (3µs) |
| 2 | Netzteil | 26 | Triggerzeitpunkt |
| 3 | Datenentkopplung | 27 | Normierte Impulsfolge |
| 4 | Sender | 28 | Triggerlinie (6µs) (Bitzeit) |
| 5 | Leitung | 29 | Triggerlinie (6µs) (Bitzeit) |
| 6 | Leitung | 30 | Triggerlinie (6µs) (Bitzeit) |
| 7 | Empfänger | 31 | Impulsscheibe |
| 8 | Bitfolge (Beispiel) | 32 | Impulsscheibe |
| 9 | Bitfolge (Manchestercodiert) | 33 | Impulsscheibe |
| | | 34 | normierte Spannung |
| 10 | Pfeil | 35 | Zeitachse (µs) |
| 11 | Pfeil | 36 | Augendiagramm |
| 12 | Impulsfolge (Sender) | 37 | Kurvenzug (oben) |
| 13 | Informationsanteil | 38 | Kurvenzug (unten) |
| 14 | Phasenwechsel | 39 | Kurvenzug |
| 15 | Impulsfolge (Empfänger) | 40 | Kurvenzug |
| 16 | Impulsfolge (ausgewertet) | 41 | Kurvenzug (rot) |
| 17 | Puls | 42 | Kurvenzug (grün) |
| 18 | Puls | 43 | Augenöffnung (rechts) |
| 19 | Pause | 44 | Augenöffnung (links) |
| 20 | Puls | 45 | Bewertungsfläche |
| 21 | Gleichanteil | 46 | Bewertungsfläche |
| 22 | Puls (erster negativer) | 47 | Bewertungsfläche |
| 23 | Normierungslinie | 48 | Bewertungsfläche |
| 24 | Zeitmaßstab | | |

## Patentansprüche

1. Verfahren zur Bewertung der Signalqualität in einem Netzwerk, bestehend aus einem Kommunikationsnetzwerk, bei dem an ein und demselben Kabel eine Vielzahl von Sendern angeschlossen ist und die Übertragungsstrecken von jedem dieser Sender zum Messort unterschiedlich lang sind, Multidrop, wobei die Signalqualität für jeden im Netzwerk vorhandenen Sender separat erfasst und in Form des Augendiagramms dargestellt und bewertet wird, wobei ferner eventuelle Kommunikationsfehler als Datenstrom auf digitaler Ebene erfasst, bewertet und angezeigt werden, und der Datenstrom in gleich lange Abschnitte unterteilt wird, die ein Vielfaches der Signaldauer lang sind, und diese Abschnitte mithilfe eines nachleuchtenden Oszilloskops oder Speicher-Oszilloskops übereinander geschrieben werden, wobei auf dem Schirm ein Bild in der Form eines Augendiagramms entsteht, **dadurch gekennzeichnet, dass** das Kommunikationsnetzwerk
1.) mit Manchester-codierten Signalen arbeitet
und das Augendiagramm als Doppelauge dargestellt wird, wobei die Leitung als hochwertig bewertete wird, wenn das linke Auge geschlossen ist, d.h. von Kurvenzügen durchsetzt ist, während das rechte Auge offen ist,
2.) und aus einem Feldbus bzw. einem Kommunikationsnetzwerk für die industrielle Automatisierungstechnik besteht, dessen Struktur im Netz eine bestimmte Topologie von Sensoren, Aktuatoren und Feldgeräten betrifft, die in einer relativ unbestimmten Struktur angeordnet sind, nämlich z. B. an einer sternförmigen Struktur, einer Ringstruktur, einer Linienstruktur mit Linien und kurzen Stichleitungen sowie mit einer Baumstruktur,
3.) und dass der Feldbus bzw. das Kommunikationsnetzwerk lediglich zwei Leitungen (5, 6) für die Übertragung von Daten und Energie verwendet.

2. Verfahren nach Anspruch 1, **dadurch gekennzeichnet, dass** zur Darstellung im Augendiagramm
1. Ein etwaiger Gleichspannungsanteil, der im aufgenommenen Telegramm enthalten sein könnte, eliminiert wird.
2. Die Amplitude des ersten (negativen) Pulses zu 100 % festgelegt wird und dass ein AS-Interface-Telegramm aus einem Masteraufruf oder Slaveantwort besteht, und dass das gesamte Telegramm entsprechend in der Amplitude von Volt auf % umgerechnet wird.
3. Der Zeitpunkt "von Xµs (z.B. 3µs) nach Beginn des Telegramms" bei 50 % der Signalamplitude des ersten (negativen) Pulses festgelegt wird und dass der Zeitmaßstab für das gesamte Telegramm entsprechend ausgerichtet wird.
4. Das Telegramm in Abschnitte von je 2-mal X µs (z. B. 6µs) aufteilt wird, die übereinander auf dem Bildschirm in Form des Augendiagramms dargestellt werden.

3. Verfahren nach Anspruch 1 oder 2, **dadurch gekennzeichnet, dass** auch eine 2 mal X µs (z. B. 6µs) lange Zeit nach Ende des Telegramms erfasst wird und dargestellt wird, um Telegrammlängenfehler und eventuell vorhandene störende Überschwinger am Ende des Telegramms sichtbar zu machen.

4. Verfahren nach einem der Ansprüche 1 bis 3, **dadurch gekennzeichnet, dass** als Bewertungskriterium geprüft wird, ob ein Informationsfehler im Telegramm enthalten ist.

5. Verfahren nach einem der Ansprüche 1 bis 4, **dadurch gekennzeichnet, dass** als Bewertungskriterium geprüft wird, ob das Telegramm einen Längenfehler aufweist.

6. Verfahren nach einem der Ansprüche 1 bis 5, **dadurch gekennzeichnet, dass** als Bewertungskriterium geprüft wird, ob alle Signalamplituden bei 100 % liegen.

7. Verfahren nach einem der Ansprüche 1 bis 6, **dadurch gekennzeichnet, dass** als Bewertungskriterium geprüft wird, ob alle Signalflanken im korrekten Zeitfenster liegen.

8. Verfahren nach einem der Ansprüche 1 bis 7, **dadurch gekennzeichnet, dass** aus den Amplituden- und Zeitabweichungen von den Sollwerten eines Telegramms ein Zahlenwert errechnet wird, der die Signalqualität des gesamten Telegramm zusammenfassend quantitativ bewertet.

9. Verfahren nach einem der Ansprüche 1 bis 8, **dadurch gekennzeichnet, dass** die einzelnen Pulse (17, 18) bewertet werden und ebenso die zwischen den Pulsen sich ergebenden Pausen (19) im Vergleich zu dem jeweils nachfolgenden Puls (20).

10. Verfahren nach einem der Ansprüche 1 bis 9, **dadurch gekennzeichnet, dass** im Augendiagramm bestimmte Bewertungsflächen (45-48) digital definiert sind, und eine Regel gilt, dass eine gute Qualität der Datenübertragung nur dann vorliegt, wenn keiner der Kurvenzüge (37-41) des Augendiagramms keine der Bewertungsflächen (45-48) schneidet.

11. Verfahren nach Anspruch 10, **dadurch gekennzeichnet, dass** als Bewertungsmassstab für eine gute Signalqualität gilt, dass in der linken Augenöffnung zwei symmetrisch zueinander angeordnete Bewertungsflächen (46) nicht von den Kurvenzügen in der linken Augenöffnung (44) geschnitten werden und dass außerhalb des Auges zwei symmetrisch zueinander angeordnete Bewertungsflächen (45) vorhanden sind, die ebenfalls nicht von den Kurvenzügen (37-41) geschnitten sind.

12. Verfahren nach Anspruch 10 oder 11 **dadurch gekennzeichnet, dass** in der rechten Augenöffnung (43) eine größere Bewertungsfläche (47) vorhanden ist, die bei guter Signalqualität nicht geschnitten ist.

13. Vorrichtung zur Bewertung der Signalqualität in einem Netzwerk, bestehend aus einem Kommunikationsnetzwerk, bei dem an ein und demselben Kabel eine Vielzahl von Sendern angeschlossen ist und die Übertragungsstrecken von jedem dieser Sender zum Messort unterschiedlich lang sind, Multidrop, wobei die Signalqualität für jeden im Netzwerk vorhandenen Sender separat erfasst und in Form des Augendiagramms dargestellt und bewertet wird, wobei ferner eventuelle Kommunikationsfehler als Datenstrom auf digitaler Ebene erfasst, bewertet und angezeigt werden, wobei der Datenstrom in gleich lange Abschnitte unterteilt wird, die ein Vielfaches der Signaldauer lang sind, und diese Abschnitte mithilfe eines nachleuchtenden Oszilloskops oder Speicher-Oszilloskops übereinander geschrieben werden, wobei auf dem Schirm ein Bild in der Form eines Doppelauges (Augendiagramm)s entsteht, **dadurch gekennzeichnet, dass** das Kommunikationsnetzwerk
1.) mit Manchester-codierten Signalen arbeitet
2.) und aus einem Feldbus bzw. einem Kommunikationsnetzwerk für die industrielle Automatisierungstechnik besteht, dessen Struktur im Netz eine bestimmte Topologie von Sensoren, Aktuatoren und Feldgeräten betrifft, die in einer relativ unbestimmten Struktur angeordnet sind, nämlich z. B. an einer sternförmigen Struktur, einer Ringstruktur, einer Linienstruktur mit Linien und kurzen Stichleitungen sowie mit einer Baumstruktur,
3.) und dass der Feldbus bzw. das Kommunikationsnetzwerk lediglich zwei Leitungen (5, 6) für die Übertragung von Daten und Energie verwendet.

14. Vorrichtung nach Anspruch 13, **dadurch gekennzeichnet, dass** ein Vergleich der aktuell ermittelten Signalqualität mit früheren Messergebnissen eine etwaige Verschlechterung der Übertragungseigenschaften des Netzwerkes (z. B. durch Isolationsschäden am Kabel oder durch geschädigte Teilnehmer) aufzeigt.

## Claims

1. Method for assessing the signal quality in a network consisting of a communications network, in which a plurality of transmitters are connected to one and the same cable and the transmission links from each of these transmitters to the measuring point have different length, multidrop, wherein the signal quality for each transmitter present in the network is recorded separately and shown in the form of the eye diagram and assessed, wherein furthermore, possible communications errors are recorded as a data stream on the digital plane, assessed and displayed, and the data stream is divided into sections of equal length which have a length many times the signal duration, and these sections are written one over another with the aid of an afterglowing oscilloscope or storage oscilloscope, wherein an image in the form of an eye diagram is produced on the screen, **characterised in that** the communications network
1.) operates using Manchester-encoded signals
and the eye diagram is shown as a double eye, wherein the line is assessed as high-grade if the left eye is closed, that is, is infiltrated by curve paths, while the right eye is open,
2.) and consists of a fieldbus or a communications network for industrial automatization, the structure of which in the network relates to a certain topology of sensors, actuators and field devices which are arranged in a relatively uncertain structure, namely for example on a star-like structure, a ring structure, a line structure with lines and short stub lines and with a tree structure,
3.) and **in that** the fieldbus or the communications network uses only two lines (5, 6) for transmitting data and energy.

2. Method, according to claim 1, **characterised in that** for representation in the eye diagram
1. A possible direct voltage proportion, which could be present in the received telegram, is eliminated.
2. The amplitude of the first (negative) pulse is fixed at 100 % and **in that** an AS interface telegram consists of a master request or slave response, and **in that** the entire telegram accordingly in amplitude is converted from volts to %.
3. The point in time "from X µs (for example 3 µs) after the start of the telegram" is fixed at 50 % of the signal amplitude of the first (negative) pulse and **in that** the time scale for the entire telegram is aligned accordingly.
4. The telegram is divided into sections of in each case 2 times X µs (for example 6 µs) which are shown one above another on the screen in the form of the eye diagram.

3. Method according to claim 1 or 2, **characterised in that** also a 2 times X µs (for example 6 µs) long time is recorded after the end of the telegram and is shown in order to make visible telegram length errors and possibly present interfering overshooting at the end of the telegram.

4. Method according to one of claims 1 to 3, **characterised in that** as an assessment criterion it is checked whether an information error is present in the telegram.

5. Method according to one of claims 1 to 4, **characterised in that** as an assessment criterion it is checked whether the telegram has a length error.

6. Method according to one of claims 1 to 5, **characterised in that** as an assessment criterion it is checked whether all signal amplitudes lie at 100 %.

7. Method according to one of claims 1 to 6, **characterised in that** as an assessment criterion it is checked whether all signal flanks lie in the correct time window.

8. Method according to one of claims 1 to 7, **characterised in that** a numerical value, which assesses quantitatively the signal quality of the entire telegram in summing-up manner, is calculated from the amplitude and timing variations from the theoretical values of a telegram.

9. Method according to one of claims 1 to 8, **characterised in that** the individual pulses (17, 18) are assessed and likewise the breaks (19) being produced between the pulses compared to the respectively subsequent pulse (20).

10. Method according to one of claims 1 to 9, **characterised in that** certain assessment areas (45-48) are defined digitally in the eye diagram, and a rule applies that a good quality of data transmission exists only when none of the curve paths (37-41) of the eye diagram cut none of the assessment areas (45-48).

11. Method according to claim 10, **characterised in that** as an assessment scale for a good signal quality, it applies that in the left eye opening, two assessment areas (46) arranged symmetrically to one another are not cut by the curve paths in the left eye opening (44) and that outside of the eye, two assessment areas (45) arranged symmetrically to one another are present which likewise are not cut by the curve paths (37-41).

12. Method according to claim 10 or 11, **characterised in that** in the right eye opening (43), a greater assessment area (47) is present which is not cut in the case of good signal quality.

13. Device for assessing the signal quality in a network consisting of a communications network, in which a plurality of transmitters are connected to one and the same cable and the transmission links from each of these transmitters to the measuring point have different length, multidrop, wherein the signal quality for each transmitter present in the network is recorded separately and shown in the form of the eye diagram and assessed, wherein furthermore, possible communications errors are recorded as a data stream on the digital plane, assessed and displayed, wherein the data stream is divided into sections of equal length which have a length many times the signal duration, and these sections are written one over another with the aid of an afterglowing oscilloscope or storage oscilloscope, wherein an image in the form of a double eye (eye diagram) is produced on the screen, **characterised in that** the communications network
1.) operates using Manchester-encoded signals
2.) and consists of a fieldbus or a communications network for industrial automatization, the structure of which in the network relates to a certain topology of sensors, actuators and field devices which are arranged in a relatively uncertain structure, namely for example on a star-like structure, a ring structure, a line structure with lines and short stub lines and with a tree structure,
3.) and **in that** the fieldbus or the communications network uses only two lines (5, 6) for transmitting data and energy.

14. Device according to claim 13, **characterised in that** a comparison of the currently determined signal quality with earlier measured results shows possible deterioration of the transmission properties of the network (for example due to insulation damage at the cable or due to damaged subscribers).

## Revendications

1. Procédé pour évaluer la qualité de signal dans un réseau, composé d'un réseau de communication, dans lequel une multiplicité d'émetteurs est raccordée à un même câble et les trajets de transmission de chacun de ces émetteurs jusqu'au lieu de mesure sont de longueurs différentes, multipoint, dans lequel la qualité de signal est captée séparément pour chaque émetteur présent dans le réseau et est représentée et évaluée sous forme de diagramme en œil, dans lequel d'éventuels défauts de communication sont par ailleurs captés comme flux de données, évalués et affichés sur un plan digital, et le flux de données est divisé en segments de même longueur qui sont plusieurs fois plus longs que la durée de signal, et ces segments sont inscrits les uns au-dessus des autres à l'aide d'un oscilloscope ou oscilloscope à mémoire à rémanence, dans lequel une image apparaît sous la forme d'un diagramme en œil sur l'écran, **caractérisé en ce que** le réseau de communication
1.) travaille avec des signaux à codage Manchester et le diagramme en œil est représenté en œil double, dans lequel la ligne est évaluée comme étant de haute qualité si l'œil gauche est fermé, c'est-à-dire traversé par des courbes tracées, tandis que l'œil droit est ouvert,
2.) et se compose d'un bus de terrain ou d'un réseau de communication pour la technique d'automatisation industrielle dont la structure dans le réseau concerne une topologie déterminée de capteurs, actionneurs et appareils de terrain qui sont disposés dans une structure relativement indéterminée, à savoir par exemple sur une structure en étoile, une structure annulaire, une structure linéaire avec des lignes et des tronçons de lignes courts ainsi qu'une structure arborescente,
3.) et que le bus de terrain ou le réseau de communication utilise seulement deux lignes (5, 6) pour la transmission de données et d'énergie.

2. Procédé selon la revendication 1, **caractérisé en ce que** pour la représentation sur le diagramme en œil,
1. une éventuelle part de tension continue qui pourrait être contenue dans le télégramme reçu est éliminée,
2. l'amplitude de la première impulsion (négative) est fixée à 100 % et **en ce qu'**un télégramme d'interface AS se compose d'un appel maître ou d'une réponse esclave et que le télégramme entier est converti de façon correspondante en amplitude de volt en %.
3. Le moment "de Xµs (par exemple 3µs) après le début du télégramme" est fixé à 50 % de l'amplitude de signal de la première impulsion (négative) et que l'échelle de temps pour le télégramme entier est ajustée de façon correspondante.
4. Le télégramme est divisé en segments de 2 fois X µs chacun (par exemple 6 µs) qui sont représentés les uns au-dessus des autres sur l'écran sous forme de diagramme en œil.

3. Procédé selon la revendication 1 ou 2, **caractérisé en ce qu'**une durée de 2 fois X µs (par exemple 6 µs) après la fin du télégramme est aussi captée et représentée pour rendre visible des erreurs de longueur de télégramme et des suroscillations gênantes éventuellement présentes à la fin du télégramme.

4. Procédé selon l'une des revendications 1 à 3, **caractérisé en ce que** comme critère d'évaluation on vérifie si une erreur d'information est contenue dans le télégramme.

5. Procédé selon l'une des revendications 1 à 4, **caractérisé en ce que** comme critère d'évaluation on vérifie si le télégramme contient une erreur de longueur.

6. Procédé selon l'une des revendications 1 à 5, **caractérisé en ce que** comme critère d'évaluation on vérifie si toutes les amplitudes de signaux sont de l'ordre de 100 %.

7. Procédé selon l'une des revendications 1 à 6, **caractérisé en ce que** comme critère d'évaluation on vérifie si tous les flancs de signaux sont situés dans la fenêtre de temps correcte.

8. Procédé selon l'une des revendications 1 à 7, **caractérisé en ce qu'**à partir des écarts d'amplitude et de temps par rapport aux valeurs théoriques d'un télégramme est calculée une valeur numérique qui évalue quantitativement de manière regroupée la qualité de signal de tout le télégramme.

9. Procédé selon l'une des revendications 1 à 8, **caractérisé en ce que** les impulsions individuelles (17, 18) sont évaluées, de même que les pauses (19) apparaissant entre les impulsions, comparativement à l'impulsion (20) suivante respective.

10. Procédé selon l'une des revendications 1 à 9, **caractérisé en ce que** des surfaces d'évaluation (45-48) déterminées dans le diagramme en œil sont définies digitalement, et une règle qui s'applique est qu'il n'y a une bonne qualité de transmission de données que si aucune des courbes tracées (37-41) du diagramme en œil ne coupe aucune des surfaces d'évaluation (45-48).

11. Procédé selon la revendication 10, **caractérisé en ce que** l'échelle d'évaluation qui s'applique pour une bonne qualité de signal est que dans l'ouverture d'œil gauche deux surfaces d'évaluation (46) disposées symétriquement l'une par rapport à l'autre ne sont pas coupées par les courbes tracées dans l'ouverture d'œil gauche (44), et qu'à l'extérieur de l'œil il y a deux surfaces d'évaluation (45) disposées symétriquement l'une par rapport à l'autre qui ne sont pas coupées elles non plus par les courbes tracées (37-41).

12. Procédé selon la revendication 10 ou 11, **caractérisé en ce que** dans l'ouverture d'oeil droite (43), il y a une surface d'évaluation plus grande (47) qui n'est pas coupée dans le cas d'une bonne qualité de signal.

13. Dispositif pour évaluer la qualité de signal dans un réseau, composé d'un réseau de communication, dans lequel une multiplicité d'émetteurs est raccordée à un même câble et les trajets de transmission de chacun de ces émetteurs jusqu'au lieu de mesure sont de longueurs différentes, multipoint, dans lequel la qualité de signal est captée séparément pour chaque émetteur présent dans le réseau et est représentée et évaluée sous forme de diagramme en œil, dans lequel d'éventuels défauts de communication sont par ailleurs captés comme flux de données, évalués et affichés sur un plan digital, dans lequel le flux de données est divisé en segments de même longueur qui sont plusieurs fois plus longs que la durée de signal, et ces segments sont inscrits les uns au-dessus des autres à l'aide d'un oscilloscope ou oscilloscope à mémoire à rémanence, dans lequel une image apparaît sous la forme d'un œil double (diagramme en œil) sur l'écran, **caractérisé en ce que** le réseau de communication
1.) travaille avec des signaux à codage Manchester
2.) et se compose d'un bus de terrain ou d'un réseau de communication pour la technique d'automatisation industrielle dont la structure dans le réseau concerne une topologie déterminée de capteurs, actionneurs et appareils de terrain qui sont disposés dans une structure relativement indéterminée, à savoir par exemple sur une structure en étoile, une structure annulaire, une structure linéaire avec des lignes et des tronçons de lignes courts ainsi qu'une structure arborescente,
3.) et que le bus de terrain ou le réseau de communication utilise seulement deux lignes (5, 6) pour la transmission de données et d'énergie.

14. Dispositif selon la revendication 13, **caractérisé en ce qu'**une comparaison de la qualité de signal déterminée actuellement avec des résultats de mesure antérieurs indique une éventuelle détérioration des caractéristiques de transmission du réseau (par exemple en raison de dégradations d'isolation sur le câble ou d'utilisateurs endommagés).
